**Europäisches Patentamt**

**European Patent Office**

**Office européen des brevets**

(11) Veröffentlichungsnummer: **0 249 722**
**B1**

(12) **EUROPÄISCHE PATENTSCHRIFT**

(45) Veröffentlichungstag der Patentschrift:
**17.10.90**

(51) Int. Cl.⁵: **B23B 31/08**

(21) Anmeldenummer: **87106208.9**

(22) Anmeldetag: **29.04.87**

(54) Halterung für einen Werkzeugantrieb.

(30) Priorität: **20.05.86 CH 2027/86**

(43) Veröffentlichungstag der Anmeldung:
**23.12.87 Patentblatt 87/52**

(45) Bekanntmachung des Hinweises auf die Patenterteilung:
**17.10.90 Patentblatt 90/42**

(84) Benannte Vertragsstaaten:
**AT CH DE FR GB IT LI SE**

(56) Entgegenhaltungen:
**DE-A- 2 353 707**
**FR-A- 2 245 226**
**GB-A- 435 779**
**US-A- 4 332 066**

(73) Patentinhaber: **BBC Brown Boveri AG, Haselstrasse,
CH-5401 Baden(CH)**

(72) Erfinder: **Björn, Niels de Place, Huunenweg 460,
CH-5242 Birr(CH)**
Erfinder: **Hüppi, Andreas, Breitenrain 28,
CH-5703 Seon(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Halterungsvorrichtung für einen Werkzeugantrieb gemäß dem Oberbegriff des Patentanspruchs 1.

Mit diesem Oberbegriff nimmt die Erfindung Bezug auf einen Stand der Technik, wie er sich beispielsweise aus der US-A 4 332 066 ergibt.

Entgratungswerkzeuge werden zur Bearbeitung verschiedenartigster Materialien eingesetzt. Dabei ist das Werkzeug in eine nachgiebige Halterung eingespannt und wird von einem Roboter gesteuert. Folgende Materialien werden heute auf diese Weise bearbeitet: Aluminium-Guß, Stahl- und Grauguß, Gesenkschmiedestücke, Stahlteile, glasfaserverstärkte Kunststoffe. Dabei kommen folgende Verfahren zur Anwendung: Fräsen, Feilen, Bürsten, Schleifen, Senken.

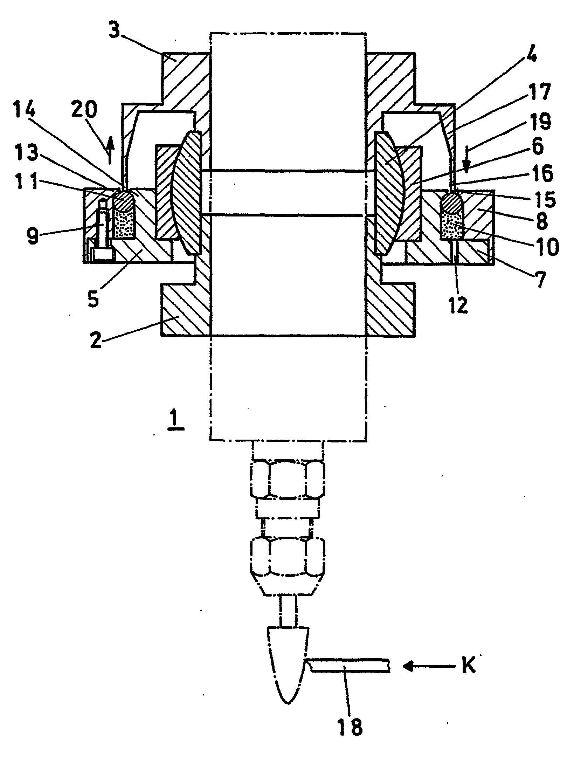

Um Unebenheiten der zu bearbeitenden Werkstückpartie, Werkstück- und Aufspanntoleranzen, unterschiedliche Gratbildung sowie Abnützung des Werkzeugs (z.B. Rundbürste) auszugleichen, wird das Werkzeug zumeist mitsamt seinem Antrieb an seiner Halterung angeordnet, z.B. unter Verwendung von Blattfedern (vgl. US-Zeitschrift "American Machinist", May 1985, S. 133, rechte Spalte oben). Auch bei Greifern für Handhabungsgeräte ist die federnde Abstützung des Greifers gegenüber dem Arm, an welchem der Greifer befestigt ist, bekannt (DE-A1 2 504 127, Fig. 2b).

Es wurde ferner vorgeschlagen, zwischen Werkzeug und Halterung eine Vielzahl kreisförmig angeordneter diskreter gleichartiger Pneumatik-Zylinder anzuordnen, die an eine gemeinsame Druckluftquelle angeschlossen sind. Diese Lösung ermöglicht jedoch keinen kompakten Aufbau und ist zudem teuer.

Aus der US-A 4 332 066 schließlich ist eine Halterung für einen Werkzeugantrieb, nämlich ein Bohrwerkzeug bekannt, das von einem Roboter gesteuert ist, mit einer Bohrmaschine, die in einer Werkzeugaufnahme gehalten ist, welche gegenüber einer Halterung um die Werkzeugachse schwenkbar ist. Scheiben aus Silikongummi dienen zur Erzeugung eines Rückstellmoments auf das Werkzeug. Zwischen der Werkzeugaufnahme und der Halterung ist eine kugelgelenkartige Schwenkvorrichtung vorgesehen, wobei deren eine Kugelfläche an der Werkzeugaufnahme und deren andere Kugelfläche an der Halterung ausgebildet ist.

Ausgehend vom Stand der Technik liegt der Erfindung die Aufgabe zugrunde, eine Halterung zu schaffen, bei welcher die Anpreßkraft des Werkzeugs in einem weiten Bereich einstellbar ist und eine praktisch gleichbleibende Auslenkkraft über den gesamten Auslenkbereich erzielbar ist.

Die Lösung dieser Aufgabe erfolgt durch die in den Patentansprüchen gekennzeichnete Erfindung.

Die Erfindung, ihre Weiterbildungen sowie die damit erzielbaren Vorteile werden nachstehend anhand eines in der Zeichnung dargestellten Ausführungsbeispiels näher erläutert.

In der einzigen Figur der Zeichnung ist ein elektrisch oder pneumatisch angetriebenes Entgratwerkzeug 1 an seinem zylindrischen Mittelteil in einer zweiteiligen Werkzeugaufnahme, bestehend aus einem unteren Flansch 2 und einem oberen Flansch 3 eingespannt, z.B. geklemmt. Die aufeinanderzugerichteten Enden der Flansche 2,3 sind abgesetzt. Diese Absätze greifen in die Bohrung einer abgeflachten Kugel 4 ein und sind darin fixiert, die Achse der Bohrung fällt mit der Drehachse des Werkzeugs zusammen.

An einer ringförmigen Halterung 5 ist eine mit der abgeflachten Kugel 4 korrespondierende ringförmige Kugelpfanne 6 angeordnet. Das untere Ende der Halterung 5 trägt eine flanschartige Erweiterung 7. Auf diese Erweiterung 7 ist ein Ring 8 mittels Schrauben 9 befestigt, wobei zwischen dem Ring 8 und dem Aussenumfang der Halterung 5 eine Ringnut 10 gebildet ist. In diese Ringnut 10 ist ein O-Ring 11 aus Elastomer eingelegt, der die Ringnut 10 nur teilweise ausfüllt. Ueber eine den Flansch 7 im Bereich der Ringnut 10 durchdringende Bohrung 12 kann die Ringnut 10 mit einem Druckmedium, z.B. Druckluft, beaufschlagt werden. Die entsprechende Anschlussarmatur ist - weil an sich bekannt - nicht dargestellt.

Um ein Herauspressen des O-Rings 12 bei Druckbeaufschlagung der Ringnut 10 zu verhindern, weisen die Enden der Ringnut umlaufende vorspringende Lippen 13, 14 auf, die zwischen sich einen Ringspalt 15 freilassen. In diesen Ringspalt 15 taucht das freie Ende 16 eines Rohres 17, dessen andere Ende am oberen Flansch 3 befestigt ist.

Wird die Ringnut mit Druckluft beaufschlagt, presst diese den O-Ring gegen die Lippen 13, 14. Der O-Ring seinerseits drückt auf das freie Ende 16 des Rohres 17. Weil nun dieses Rohr mit dem oberen Flansch 3 und damit auch mit dem Werkzeug 1 starr verbunden ist, wird letzteres in einer definierten Mittelstellung gehalten.

Wird nun das Werkzeug 1 gegen das zu entgratende Werkstück 18 oder vice versa bewegt, so wirkt auf das Werkzeug 1 eine Auslenkkraft K, die auf dem Weg über das Rohr 17 auf den O-Ring. 11 wirkt, was dazu führt, dass die rechte Hälfte des Rohrs 17 tiefer in den Ringspalt 15 eintaucht (Pfeil 19), während die gegenüberliegende Seite eine entgegengesetzte Bewegung ausführt. Durch Verändern des Druckes in der Ringnut 10 lässt sich auf diese Weise die Auslenkung und auch die Auslenkkraft in weiten Grenzen einstellen, mit dem zusätzlichen Vorteil, dass die Auslenkkraft über einen bestimmten Auslenkbereich (bei Entgratungswerkzeugen typisch bis 5°) annähernd konstant bleibt.

Die erfindungsgemässe Halterung ist darüber hinaus in allen Lagen einsetzbar, zeichnet sich durch leichte Bauweise aus und kann durch geeignete Zwischenflansche für jeden Robotertyp passend gemacht werden.

## Patentansprüche

1. Halterungsvorrichtung für einen Werkzeugantrieb, insbesondere für ein Entgratwerkzeug, das von einem Roboter gesteuert ist, die eine Halterung (5) und eine Werkzeugaufnahme (2, 3) aufweist, mit einem Werkzeug (1), das in der Werkzeugaufnahme (2, 3) gehalten ist, welche Werkzeugaufnahme gegenüber die Halterung (5) um die Werkzeugachse schwenkbar ist und Mitteln zur Erzeugung eines Rückstellmoments auf das Werkzeug, wobei zwischen der Werkzeugaufnahme und der Halterung eine kugelgelenkartige Schwenkvorrichtung vorgesehen ist, deren eine Kugelfläche an der Werkzeugaufnahme (2, 3) und deren andere Kugelfläche an der Halterung (5) ausgebildet sind, dadurch gekennzeichnet, daß an der Halterung (5) eine zur Werkzeugachse konzentrische Ringnut (10) ausgebildet ist, die am offenen Ende der Ringnut (10) durch einen O-Ring verschlossen ist, daß an der Werkzeugaufnahme (2, 3) ein zum Werkzeug (1) konzentrisches Rohr (17) vorgesehen ist, dessen freies Ende (16) in die besagte Ringnut (10) eintauchbar ist, daß Mittel (12) zur Beaufschlagung des Ringraumes zwischen Ringnutgrund und O-Ring (11) mit einem Druckmedium vorgesehen sind.

2. Halterung nach Anspruch 1, dadurch gekennzeichnet, dass die Werkzeugaufnahme zweiteilig ausgebildet ist und einen oberen (3) und einen unteren Flansch (2) aufweist, dass beide Flansche mit koaxialen Bohrungen versehen sind, in welche das Werkzeug einführbar und dort fixierbar ist, dass beide Flansche über eine abgeflachte Kugel (4) miteinander verbunden sind, und dass an der Halterung (4) ein weiterer Ring (6) mit innenliegender Kugelpfanne vorgesehen ist.

3. Halterung nach Anspruch 1 oder 2, dadurch gekennzeichnet, dass die Ränder der Ringnut (10) mit vorspringenden Lippen (13, 14) versehen sind, um ein Heraustreten des O-Rings (11) bei Druckbeaufschlagung des Ringraums der Ringnut (10) zu verhindern.

## Claims

1. Mounting device for a tool drive, in particular for a deburring tool which is controlled by a robot, which mounting device has a mounting (5) and a toolholder (2, 3), a tool (1) which is held in the toolholder (2, 3), which toolholder is pivotable about the tool axis relative to the mounting (5), and means for producing a restoring moment on the tool, a pivoting device like a ball-and-socket joint being provided between the toolholder and the mounting, one spherical surface of which pivoting device is formed on the toolholder (2, 3) and its other spherical surface is formed on the mounting (5), characterized in that an annular groove (10) concentric to the tool axis is formed on the mounting (5), which annular groove (10) is closed at its open end by an O-ring, in that a tube (17) concentric to the tool (1) is provided on the toolholder (2, 3), the free end (16) of which tube (17) can plunge into the said annular groove (10), and in that means (12) are provided for pressurizing the annular space between annular-groove root and O-ring (11) with a pressure medium.

2. Mounting according to Claim 1, characterized in that the toolholder is of two-piece design and has a top flange (3) and a bottom flange (2), in that both flanges are provided with coaxial bores into which the tool can be inserted and fixed there, in that both flanges are connected to one another via a truncated ball (4), and in that a further ring (6) having an internal ball socket is provided on the mounting (4) [sic].

3. Mounting according to Claim 1 or 2, characterized in that the margins of the annular groove (10) are provided with projecting lips (13, 14) in order to prevent the O-ring (11) from coming out during pressurizing of the annular space of the annular groove (10).

## Revendications

1. Dispositif de fixation pour une commande d'outil, en particulier pour un outil d'ébavurage qui est piloté par un robot, qui comprend une fixation (5) et un porte-outil (2, 3), avec un outil (1) qui est monté dans le porte-outil (2, 3), porte-outil qui peut pivoter autour de l'axe de l'outil par rapport à la fixation (5), et avec des moyens pour produire un couple de rappel sur l'outil, où il est prévu entre le porte-outil et la fixation un dispositif d'articulation à rotule, dont une surface sphérique est formée dans le porte-outil (2, 3) et dont l'autre surface sphérique est formée dans la fixation (5), caractérisé en ce que la fixation (5) est pourvue d'une rainure annulaire (10) concentrique à l'axe de l'outil, qui est fermée à son extrémité ouverte par un joint torique, en ce qu'il est prévu sur le porte-outil (2, 3) un tube (17) concentrique à l'outil (1), dont l'extrémité libre (16) peut plonger dans ladite rainure annulaire (10), en ce qu'il est prévu des moyens (12) pour alimenter la cavité de la rainure entre le fond de la rainure et le joint torique (11) avec un agent sous pression.

2. Dispositif de fixation suivant la revendication 1, caractérisé en ce que le porte-outil est constitué de deux parties et comprend une bride supérieure (3) et une bride inférieure (2), en ce que les deux brides sont pourvues d'alésages coaxiaux dans lesquels l'outil peut être introduit et fixé, en ce que les deux brides sont reliées l'une à l'autre par une boule aplatie (4), et en ce qu'il est prévu sur la fixation (5) un anneau supplémentaire (6) avec une cuvette sphérique intérieure.

3. Dispositif de fixation suivant la revendication 1 ou 2, caractérisé en ce que les bords de la rainure annulaire (10) sont pourvus de lèvres saillantes (13, 14), pour empêcher une expulsion du joint torique (11) lors de la mise sous pression de la cavité annulaire de la rainure annulaire (10).